# EUROPEAN PATENT APPLICATION

(11) **EP 4 660 067 A1**
(43) Date of publication of application: **10.12.2025**
(21) Application number: 23926258.7
(22) Date of filing: 07.03.2023
(51) Int. Cl.: B62M 7/02, B60K 13/04

(54) **VEHICLE BODY STRUCTURE AND SADDLE-TYPE VEHICLE**

(71) Applicant: HONDA MOTOR CO., LTD., Tokyo 105-8404 (JP)
(72) Inventor: SHINOHARA, Chikako, Tokyo 107-8556 (JP); HAGIHARA, Toshihisa, Tokyo 110-0005 (JP)
(74) Representative: Kiwit, Benedikt
(86) International application number: PCT/JP2023/008640
(87) International publication number: WO 2024/185044

(57) **Abstract**

A vehicle body structure comprising an engine, a first cylindrical portion that forms an exhaust path of the engine and accommodates a first catalyst, a second cylindrical portion that is disposed on a downstream side of the first cylindrical portion in the exhaust path and accommodates a second catalyst, and a connection pipe that connects the first cylindrical portion and the second cylindrical portion and has a diameter smaller than diameters of the first cylindrical portion and the second cylindrical portion, the exhaust path extending rearward through at least a lower portion of the engine, a discharge hole for discharging lubricating oil being provided in the lower portion of the engine, the connection pipe being located so as to be adjacent to the discharge hole in a vehicle width direction.

## Description

### TECHNICAL FIELD

The present invention mainly relates to a vehicle body structure.

### BACKGROUND ART

Efforts for the purpose of mitigating climate change or reducing the influence of climate change have been continued conventionally, and research and development on an exhaust gas purification device has been conducted to achieve the purpose. Since the exhaust gas purification device is provided in an exhaust path of an engine, such research and development requires examination of an entire vehicle body structure including the engine.

### CITATION LIST

### PATENT LITERATURE

PTL1: Japanese Patent Laid-Open No. 2014-25436

### SUMMARY OF INVENTION

### TECHNICAL PROBLEM

Patent Literature 1 describes a structure including an oil pan below an engine, and at the time of maintenance, lubricating oil (engine oil) can be discharged from below the engine through a discharge hole. Since the exhaust path of the engine extends to the rear of a vehicle body, the vehicle body structure is required to be designed in consideration of a case where replacement of the lubricating oil is required at the time of maintenance.

The present invention has been made with the recognition of the above problems as a trigger, and has an illustrative purpose of improving maintainability of a vehicle and contributes to mitigation of climate change or reduction of the influence of climate change.

### SOLUTION TO PROBLEM

One aspect of the invention is a vehicle body structure, characterized by comprising:
an engine;
a first cylindrical portion that forms an exhaust path of the engine and accommodates a first catalyst;
a second cylindrical portion that is disposed on a downstream side of the first cylindrical portion in the exhaust path and accommodates a second catalyst; and
a connection pipe that connects the first cylindrical portion and the second cylindrical portion and has a diameter smaller than diameters of the first cylindrical portion and the second cylindrical portion,
the exhaust path extending rearward through at least a lower portion of the engine,
a discharge hole for discharging lubricating oil being provided in the lower portion of the engine,
the connection pipe being located so as to be adjacent to the discharge hole in a vehicle width direction.

### ADVANTAGEOUS EFFECTS OF INVENTION

The present invention is advantageous for improving maintainability of a vehicle.

### BRIEF DESCRIPTION OF DRAWINGS

FIG. 1 is a side view of a structure of a vehicle according to an embodiment.
FIG. 2 is an enlarged view of a vehicle body structure around an engine of the vehicle.
FIG. 3 is a cross-sectional view of the vehicle body structure around the engine of the vehicle as viewed from below.
FIG. 4 is an enlarged cross-sectional view of the vehicle body structure around the engine of the vehicle.

### DESCRIPTION OF EMBODIMENTS

Hereinafter, embodiments will be described in detail with reference to the attached drawings. Note that the following embodiments are not intended to limit the scope of the claimed invention, and limitation is not made an invention that requires all combinations of features described in the embodiments. Two or more of the multiple features described in the embodiments may be combined as appropriate. Furthermore, the same reference numerals are given to the same or similar configurations, and redundant description thereof is omitted.

### (First Embodiment)

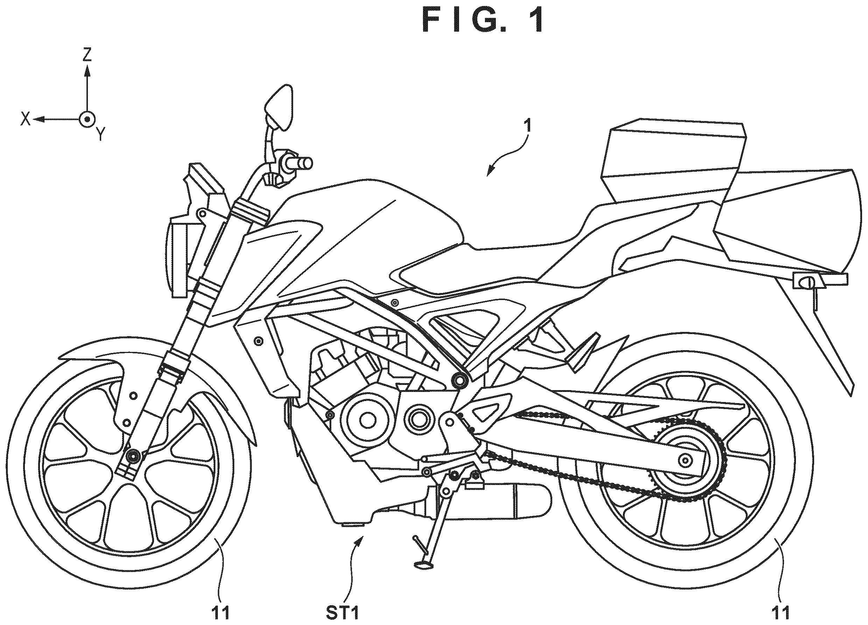

FIG. 1 is a left side view illustrating an overall configuration of a vehicle 1 according to an embodiment. In the present embodiment, the vehicle 1 is a two-wheeled vehicle including two wheels 11 (one front wheel and one rear wheel), but the number of wheels 11 is not limited thereto. For example, the vehicle 1 may be a three-wheeled vehicle including two front wheels and one rear wheel or including one front wheel and two rear wheels. Further, the vehicle 1 is a straddle type vehicle, but may be a boarding type vehicle such as a scooter.

In the drawing, an X axis, a Y axis, and a Z axis, which are orthogonal to one another, are illustrated in order to facilitate understanding of the structure (the same also applies to other drawings to be described later). An X direction corresponds to a front-and-rear direction of a vehicle body, a Y direction corresponds to a left-and-right direction of the vehicle body or a vehicle width direction, and a Z direction corresponds to an up-and-down direction of the vehicle body or a height direction of the vehicle body. In the present specification, expressions such as front/rear, left/right (lateral side), and up/down indicate relative positional relationships with respect to the vehicle body. For example, expressions such as "front" and "front side" correspond to a +X direction, and expressions such as "rear" and "rear side" correspond to a -X direction. Similarly, expressions such as the inside of the vehicle body/the outside of the vehicle body (inside and outside of the vehicle) indicate a relative positional relationship with respect to the vehicle body.

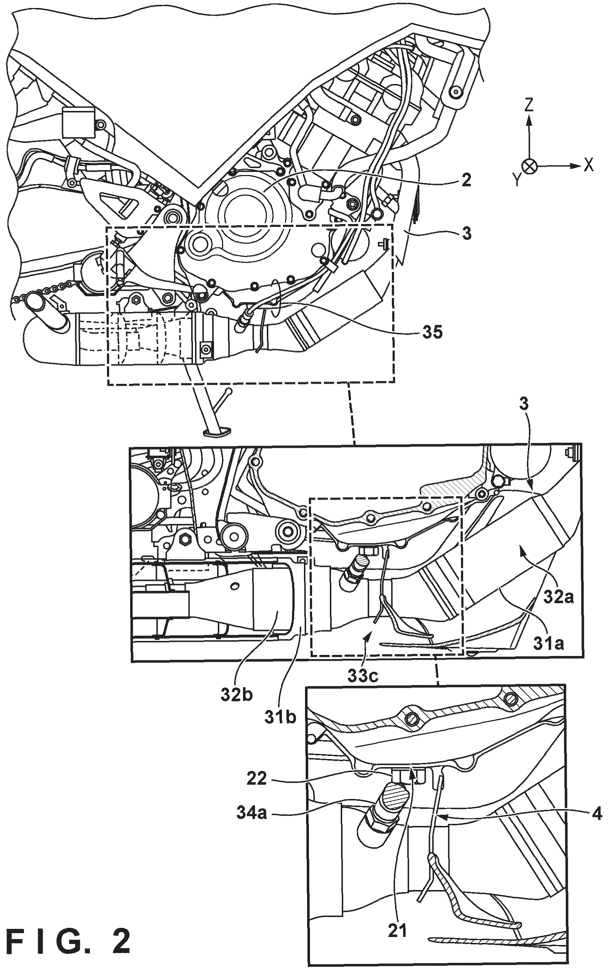

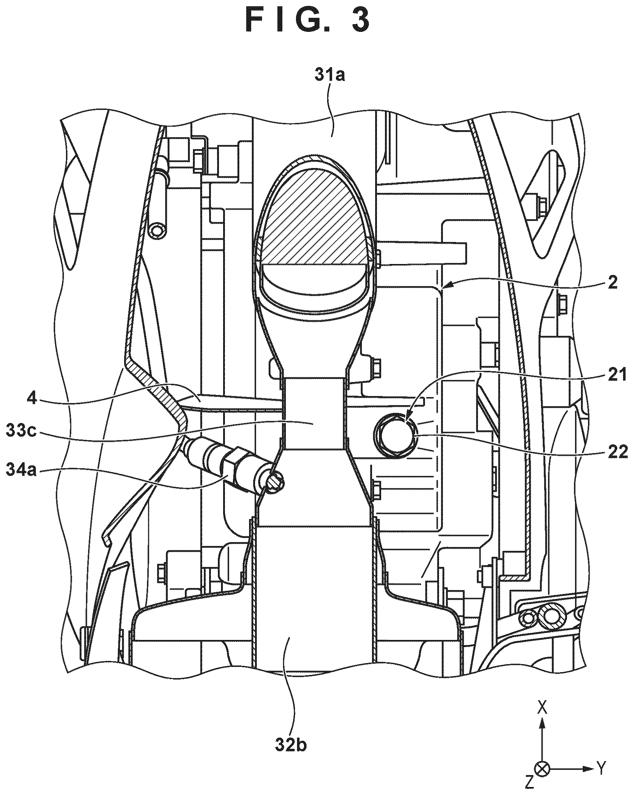

FIG. 2 is a right side view of a vehicle body structure ST1 around an engine 2 included in the vehicle 1 and an enlarged view thereof. FIG. 3 is a schematic cross-sectional view of the vehicle body structure ST1 as viewed from below.

A known engine may be used as the engine 2, and a discharge hole 21 is provided below the engine so that lubricating oil (engine oil) can be discharged from the discharge hole 21. Normally, the discharge hole 21 is sealed with a predetermined cap, and can be sealed here with a drain bolt 22.

The vehicle 1 includes an exhaust pipe 3 forming an exhaust path of the engine 2. The exhaust pipe 3 extends from the upper portion of the engine 2 through the front portion of the engine 2 and further extends rearward through the lower portion of the engine 2. In the present embodiment, the exhaust pipe 3 includes cylindrical portions 31a and 31b and a connection pipe 33c connecting the cylindrical portions.

The cylindrical portion 31a is located on the front side of the lower portion of the engine 2. The cylindrical portion 31b is disposed on the downstream side of the cylindrical portion 31a, and is located on the rear side of the lower portion of the engine 2. Here, the downstream side refers to the side in an exhaust direction, and the opposite side thereof is defined as the upstream side.

The cylindrical portions 31a and 31b are configured to be relatively thick, and accommodate catalysts 32a and 32b, respectively. In the present embodiment, the catalysts 32a and 32b are made of the same material and have different sizes, but the materials and the sizes may be the same as or different from each other depending on the application.

The connection pipe 33c has a diameter smaller than the diameters of the cylindrical portions 31a and 31b, and connects the cylindrical portions 31a and 31b. The exhaust gas having passed through the cylindrical portion 31a flows toward the cylindrical portion 31b via the connection pipe 33c.

The connection pipe 33c corresponds to a portion of the exhaust pipe 3 between the catalyst 32a accommodated in the cylindrical portion 31a and the catalyst 32b accommodated in the cylindrical portion 31b, and is a portion having a relatively small diameter accordingly.

A gas sensor 34a is attached to the exhaust pipe 3, and the exhaust gas at the attachment position can be detected. In the present embodiment, the gas sensor 34a is an O₂ sensor capable of detecting an oxygen concentration of the exhaust gas, but as another embodiment, may be a linear air fuel ratio (LAF) sensor capable of detecting an air ratio. The gas sensor 34a is provided, for example, on the downstream side of the cylindrical portion 31a, and is provided in the connection pipe 33c here.

Incidentally, one or more other gas sensors may be further attached to, for example, the upstream side of the cylindrical portion 31a, the downstream side of the cylindrical portion 31b, or the like in the exhaust pipe 3. An electronic control unit (ECU) (not illustrated) monitors a driving mode of the engine 2 and performs driving control of the engine 2 based on a detection result of the gas sensor.

A harness 35 for transferring a signal indicating the detection result to the ECU is connected to the gas sensor 34a. As illustrated in FIG. 3, the gas sensor 34a is attached such that a terminal portion (distal end portion) connected to the harness 35 is located outside the vehicle body from a base portion (proximal end portion) on the connection pipe 33c side. As a result, the harness 35 extends toward the outside of the vehicle body and realizes electrical connection with the ECU through the side portion of the vehicle body structure ST1.

As described above, the connection pipe 33c corresponds to a portion of the exhaust pipe 3 between the catalyst 32a and the catalyst 32b, and is a portion having a relatively small diameter accordingly. In the present embodiment, the gas sensor 34a is attached to a portion of the connection pipe 33c where the diameter gradually changes on the cylindrical portion 31b side, so that the terminal portion is inclined so as to be located in front of the base portion.

As can be seen from FIG. 3, the connection pipe 33c and the discharge hole 21 are located so as to be adjacent to each other in the Y direction, that is, do not overlap each other when viewed in the Z direction. As a result, at the time of maintenance, a user including an operator can relatively easily access the drain bolt 22, and the drain bolt 22 can be removed to appropriately discharge the lubricating oil from the discharge hole 21. With this structure, the gas sensor 34a is disposed on the side opposite to the discharge hole 21 with respect to the connection pipe 33c, and the harness 35 extends in a direction away from the discharge hole 21.

As described above, the discharge hole 21 is normally sealed by the drain bolt 22, and as can be seen from FIG. 2, the gas sensor 34a and the drain bolt 22 are located so as to overlap each other when viewed in the Y direction. As a result, the drain bolt 22 can protect the gas sensor 34a from a flying stone from the side when the vehicle 1 travels.

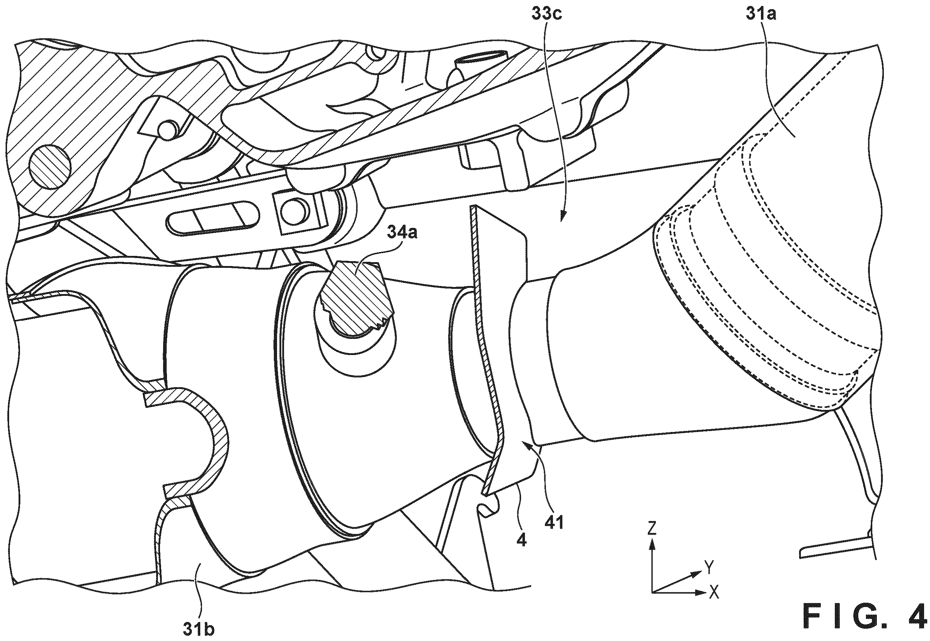

FIG. 4 is an enlarged cross-sectional view of the vehicle body structure ST1. The vehicle 1 further includes a protection member 4 disposed in front of the gas sensor 34a. The protection member 4 is formed in a plate shape and can be attached to the connection pipe 33c. The protection member 4 only needs to be located in front of the gas sensor 34a, and can protect the gas sensor 34a from a flying stone from the front.

In the present embodiment, the diameter of the connection pipe 33c at the position where the protection member 4 is attached is smaller than the diameter of the connection pipe 33c at the position where the gas sensor 34a is attached. As described above, the gas sensor 34a is inclined such that the terminal portion is positioned in front of the base portion. As a result, the gas sensor 34a approaches the protection member 4 at the terminal portion, and can be appropriately protected by the protection member 4.

In the present embodiment, the protection member 4 is disposed to be inclined such that the lower end portion is located behind the upper end portion. As a result, a traveling wind can flow rearward and downward, and air resistance during traveling of the vehicle 1 is reduced as compared with a case where the protection member 4 is installed in a substantially vertical posture. In addition, when the gas sensor 34a is attached/detached, it is possible to prevent interference between a tool required for the attachment/detachment and the protection member 4, that is, it is possible to improve attachment and maintenance.

The posture of the protection member 4 only needs to be able to receive the traveling wind rearward, and as another example, the protection member 4 may be disposed to be inclined such that the upper end portion is located rearward with respect to the lower end portion.

With the structure of FIG. 3 in which the connection pipe 33c and the discharge hole 21 are adjacent to each other in the Y direction, the protection member 4 is disposed on the side opposite to the discharge hole 21 with respect to the connection pipe 33c.

The protection member 4 is at least partially provided with a bent portion 41 for the purpose of enhancing its robustness. The bent portion 41 may have a gently curved shape or a sharply bent shape, that is, the curvature of the bent portion 41 is irrelevant.

For the same purpose, a rib portion may be provided instead of the bent portion 41. In this case, the rib portion can be formed on an edge portion of the protection member 4, but one or more rib portions may be formed on a main surface of the protection member 4.

As described above, according to the vehicle body structure ST1, the exhaust pipe 3 forming the exhaust path extends to the rear through at least the lower portion of the engine 2, and the connection pipe 33c is located so as to be adjacent to the discharge hole 21 provided in the lower portion of the engine 2 in the Y direction. Therefore, at the time of maintenance, the user can prevent interference between a tool required for the maintenance and the connection pipe 33c, and can access the drain bolt 22 relatively easily (more easily than a case where the cylindrical portion 31a or 31b is adjacent to the discharge hole 21 in the Y direction). As a result, it is possible to appropriately discharge the lubricating oil from the discharge hole 21, and at that time, it is also possible to prevent the discharged lubricating oil from contacting the gas sensor 34a. Accordingly, the present embodiment is advantageous for improving maintainability of the vehicle 1.

In addition, since the drain bolt 22 and the protection member 4 can appropriately protect the gas sensor 34a without hindering maintenance, the present embodiment is also advantageous for improving the reliability of the vehicle 1.

In the description heretofore, in order to facilitate the understanding, each element is indicated with a name related to its functional aspect. However, each element is not limited to an element including the content described in the embodiments as a main function, but may be an element including the content as a supplementary function. Thus, each element may be replaced with a similar expression without being strictly limited by its expression. For the same purpose, the expression "apparatus" may be replaced with "unit", "part (component, piece)", "member", "structure", "assembly" or the like, or may be omitted or attached.

### (Summary of Embodiments)

Some features exemplified in the embodiments are as follows:
[1] A vehicle body structure (ST1), characterized by comprising:
   an engine (2);
   a first cylindrical portion (31a) that forms an exhaust path of the engine and accommodates a first catalyst (32a);
   a second cylindrical portion (31b) that is disposed on a downstream side of the first cylindrical portion in the exhaust path and accommodates a second catalyst (32b); and
   a connection pipe (33c) that connects the first cylindrical portion and the second cylindrical portion and has a diameter smaller than diameters of the first cylindrical portion and the second cylindrical portion,
   the exhaust path extending rearward through at least a lower portion of the engine,
   a discharge hole (21) for discharging lubricating oil being provided in the lower portion of the engine,
   the connection pipe being located so as to be adjacent to the discharge hole in a vehicle width direction.
   As a result, a user can appropriately access the discharge hole at the time of maintenance, that is, the access is easier as compared with a case where the first cylindrical portion or the second cylindrical portion and the discharge hole are adjacent in the vehicle width direction, and the maintainability of the vehicle can be improved.
[2] The vehicle body structure according to [1], characterized by further comprising
   a gas sensor (34a) that is attached to the connection pipe so as to be able to detect gas in the connection pipe,
   the gas sensor being disposed on a side opposite to the discharge hole with respect to the connection pipe.
   As a result, the lubricating oil discharged from the discharge hole can be prevented from contacting the gas sensor, and maintainability of the vehicle can be improved.
[3] The vehicle body structure according to [2], characterized in that
   the discharge hole is capable of being sealed with a predetermined cap (22), and
   the cap is located so as to overlap the gas sensor in a side view.
   As a result, the gas sensor can be appropriately protected from a flying stone from the side when a vehicle travels.
[4] The vehicle body structure according to [2], characterized by further comprising
   a harness (35) that is connected to the gas sensor,
   the harness extending in a direction away from the discharge hole.
   As a result, the harness can be appropriately installed, and it is possible to prevent the lubricating oil discharged from the discharge hole from contacting the harness.
[5] The vehicle body structure according to [2], characterized by further comprising
   a protection member (4) that is disposed in front of the gas sensor so as to be able to protect the gas sensor,
   the protection member being disposed on the side opposite to the discharge hole with respect to the connection pipe.
   As a result, the user can appropriately access the discharge hole at the time of maintenance.
[6] The vehicle body structure according to [5], characterized in that
   the protection member is formed in a plate shape and is disposed to be inclined such that one of an upper end portion and a lower end portion is located rearward with respect to the other.
   As a result, a traveling wind can be received rearward, and air resistance during traveling of the vehicle can be reduced as compared with a case where the protection member is installed in the substantially vertical posture.
[7] The vehicle body structure according to [5], characterized in that
   the protection member is formed in a plate shape and includes a bent portion (41).
   As a result, the robustness of the protection member can be enhanced.
[8] The vehicle body structure according to [2], characterized in that
   the gas sensor is an O₂ sensor.
   As a result, an oxygen concentration of the exhaust gas can be detected.
[9] The vehicle body structure according to [1], characterized in that
   the first catalyst and the second catalyst are made of a same material.
   According to specifications or applications required for an exhaust gas purification device, these may be made of different materials.
[10] The vehicle body structure according to [9], characterized in that
   the first catalyst and the second catalyst have different sizes.
   According to specifications or applications required for the exhaust gas purification device, these may be configured in the same size.
[11] A straddle type vehicle, characterized by comprising:
   the vehicle body structure according to any one of [1] to [10]; and
   wheels (11).
   That is, the above-described vehicle body structure is generally applicable to a typical straddle type vehicle..
[12] The straddle type vehicle according to [11], characterized in that
   the straddle type vehicle is a two-wheeled vehicle.
   That is, the above-described vehicle body structure is generally applicable to a typical two-wheeled vehicle.

The invention is not limited to the foregoing embodiments, and various variations/changes are possible within the spirit of the invention.

## Claims

1. A vehicle body structure, **characterized by** comprising:
an engine;
a first cylindrical portion that forms an exhaust path of the engine and accommodates a first catalyst;
a second cylindrical portion that is disposed on a downstream side of the first cylindrical portion in the exhaust path and accommodates a second catalyst; and
a connection pipe that connects the first cylindrical portion and the second cylindrical portion and has a diameter smaller than diameters of the first cylindrical portion and the second cylindrical portion,
the exhaust path extending rearward through at least a lower portion of the engine,
a discharge hole for discharging lubricating oil being provided in the lower portion of the engine,
the connection pipe being located so as to be adjacent to the discharge hole in a vehicle width direction.

2. The vehicle body structure according to claim 1, **characterized by** further comprising
a gas sensor that is attached to the connection pipe so as to be able to detect gas in the connection pipe,
the gas sensor being disposed on a side opposite to the discharge hole with respect to the connection pipe.

3. The vehicle body structure according to claim 2, **characterized in that**
the discharge hole is capable of being sealed with a predetermined cap, and
the cap is located so as to overlap the gas sensor in a side view.

4. The vehicle body structure according to claim 2, **characterized by** further comprising
a harness that is connected to the gas sensor,
the harness extending in a direction away from the discharge hole.

5. The vehicle body structure according to claim 2, **characterized by** further comprising
a protection member that is disposed in front of the gas sensor so as to be able to protect the gas sensor,
the protection member being disposed on the side opposite to the discharge hole with respect to the connection pipe.

6. The vehicle body structure according to claim 5, **characterized in that**
the protection member is formed in a plate shape and is disposed to be inclined such that one of an upper end portion and a lower end portion is located rearward with respect to the other.

7. The vehicle body structure according to claim 5, **characterized in that**
the protection member is formed in a plate shape and includes a bent portion.

8. The vehicle body structure according to claim 2, **characterized in that**
the gas sensor is an O₂ sensor.

9. The vehicle body structure according to claim 1, **characterized in that**
the first catalyst and the second catalyst are made of a same material.

10. The vehicle body structure according to claim 9, **characterized in that**
the first catalyst and the second catalyst have different sizes.

11. A straddle type vehicle, **characterized by** comprising:
the vehicle body structure according to any one of claims 1 to 10; and
wheels.

12. The straddle type vehicle according to claim 11, **characterized in that**
the straddle type vehicle is a two-wheeled vehicle.
